# EUROPÄISCHE PATENTSCHRIFT

(11) **EP 2 662 182 B1**
(45) Veröffentlichungstag und Bekanntmachung des Hinweises auf die Patenterteilung: **21.05.2014**
(21) Anmeldenummer: 13166579.6
(22) Anmeldetag: 06.05.2013
(51) Int. Cl.: B23Q 7/04, B21D 28/10, B21D 43/28

(54) **Verfahren und Vorrichtung zum Trennen von Bearbeitungsprodukten an einer Werkzeugmaschine**
Device and method for separating processing products on a machine tool
Procédé et dispositif de séparation de produits de traitement sur une machine-outil

(30) Priorität: 10.05.2012 DE 102012207818
(43) Veröffentlichungstag der Anmeldung: 13.11.2013
(73) Patentinhaber: Trumpf Sachsen GmbH, 01904 Neukirch (DE)
(72) Erfinder: Bauch, Heiko, 02526 Bautzen (DE); Protze, Christoph, 02696 Singwitz (DE); Schmidt, Andreas, 02627 Hochkirch (DE)
(74) Vertreter: Kohler Schmid Möbus

(56) Entgegenhaltungen:
- DE-T2-602004 012 302
- US-A1- 2008 023 900

## Beschreibung

Die Erfindung betrifft ein Verfahren zum Trennen von Bearbeitungsprodukten an einer Werkzeugmaschine in Form eines an der Werkzeugmaschine aus einem plattenartigen Werkstück, insbesondere aus einem Blech, durch schneidende Werkstückbearbeitung erstellten Werkstückzuschnittes und eines den Werkstückzuschnitt nach der Werkstückbearbeitung umgebenden Restwerkstückes,
- wobei der Werkstückzuschnitt und das diesen umgebende Restwerkstück nach der Werkstückbearbeitung in einer plattenparallelen Werkstückebene angeordnet sind und
- wobei der Werkstückzuschnitt und das diesen umgebende Restwerkstück mittels einer Hintergriffseinheit einer Handlingvorrichtung gemeinschaftlich hintergriffen und durch die Hintergriffseinheit der Handlingvorrichtung mit einer Anordnung in der Werkstückebene gelagert werden.

Die Erfindung betrifft des Weiteren ein Verfahren zum Sortieren von Bearbeitungsprodukten an einer Werkzeugmaschine, im Rahmen dessen ein Werkstückzuschnitt und ein diesen umgebendes Restwerkstück voneinander getrennt werden.

Außerdem betrifft die Erfindung eine Handlingvorrichtung zur Durchführung des eingangs genannten Verfahrens zum Trennen von Bearbeitungsprodukten sowie eine mit einer derartigen Handlingvorrichtung versehene maschinelle Anordnung zum schneidenden Bearbeiten von plattenartigen Werkstücken, insbesondere von Blechen.

Gattungsgemäßer Stand der Technik ist bekannt aus US 2008/0023900 A1. Diese Druckschrift offenbart eine Anlage zum Laserschneiden von plattenartigen Werkstücken. Vor einer Laserschneideinheit ist ein Palettenwechsler mit einer Werkstückauflage angeordnet, welcher die Werkstücke nach der schneidenden Bearbeitung zugeführt werden. An einem bearbeiteten Werkstück sind Fertigteile in Form von Werkstückzuschnitten von einem als Restgitter vorliegenden Restwerkstück umgeben. Mittels einer Handlingvorrichtung werden die Fertigteile und das Restgitter eines bearbeiteten Werkstückes gemeinschaftlich von der Werkstückauflage des Palettenwechslers abgenommen. Zu diesem Zweck weist die Handlingvorrichtung eine Hintergriffseinheit mit zwei Hubgabeln auf, die an einem Tragrahmen der Handlingvorrichtung gegenläufig bewegbar sind. Zum Aufnehmen eines bearbeiteten Werkstückes verfährt die Handlingvorrichtung an einem Führungsgerüst in eine Position oberhalb der Werkstückauflage des Palettenwechslers. Anschließend werden die in ihre Offenstellung bewegten Hubgabeln der Handlingvorrichtung auf ein Niveau abgesenkt, auf welchem sie unterhalb des aufzunehmenden Werkstückes liegen. Nachdem die Hubgabeln gegenläufig in ihre Hintergriffsstellung bewegt worden sind und infolgedessen das bearbeitete Werkstück an dessen Unterseite hintergreifen, werden die Hubgabeln gemeinsam mit den Fertigteilen und dem Restgitter des bearbeiteten Werkstückes angehoben. Danach verfährt die Handlingvorrichtung mit den daran gelagerten Fertigteilen und dem daran gelagerten Restgitter seitlich über einen Werkstücktisch. Durch Absenken und anschließendes Bewegen der Hubgabeln in die Offenstellung wird das bearbeitete Werkstück mit den Fertigteilen und dem diese umgebenden Restgitter von der Handlingvorrichtung auf dem Werkstücktisch abgelegt. Anschließend werden die Hubgabeln der Handlingvorrichtung wieder über den Werkstücktisch angehoben und die Handlingvorrichtung verfährt seitlich zurück in die Position über der Werkstückauflage des Palettenwechslers.

Nachdem die Handlingvorrichtung den Nahbereich des Werkstücktisches verlassen hat, wird dieser von einer portalartigen Rahmenstruktur überfahren. An der den Werkstücktisch übergreifenden Rahmenstruktur wird das auf dem Werkstücktisch abgelegte Restgitter fixiert. Anschließend wird der Werkstücktisch auf ein Niveau unterhalb des an der Rahmenstruktur fixierten Restgitters abgesenkt. Die Absenkbewegung des Werkstücktisches wird von den auf dem Werkstücktisch abgelegten Fertigteilen mitvollzogen, die dadurch von dem an der Rahmenstruktur fixierten Restgitter getrennt werden.

Den Stand der Technik verfahrens- und vorrichtungsbezogen zu vereinfachen, ist Aufgabe der vorliegenden Erfindung.

Erfindungsgemäß gelöst wird diese Aufgabe durch die Verfahren gemäß Patentanspruch 1 und gemäß Patentanspruch 11 sowie durch die Handlingvorrichtung gemäß Patentanspruch 12 und die maschinelle Anordnung gemäß Patentanspruch 14.

Im Falle der Erfindung erfolgt die Trennung eines Werkstückzuschnittes und eines Restwerkstückes an der Handlingvorrichtung und dabei während der Werkstückzuschnitt und das Restwerkstück von der Hintergriffseinheit der Handlingvorrichtung hintergriffen werden. Demnach zeichnet sich die Erfindung dadurch aus, dass das Handling eines bearbeiteten Werkstückes und die Trennung der Bearbeitungsprodukte miteinander verknüpft werden. Verfahrensbezogen ist erfindungsgemäß eine zeitliche Parallelisierung des Transportes des bearbeiteten Werkstückes und der Trennung von Werkstückzuschnitt und Restwerkstück realisiert. Vorrichtungsbezogen werden im Falle der Erfindung getrennt von der Handlingvorrichtung vorzusehende Einrichtungen zur Trennung der Bearbeitungsprodukte eingespart. Daraus resultiert insbesondere eine kompakte Bauweise erfindungsgemäßer maschineller Anordnungen.

Als Hintergriffseinheit ist an erfindungsmäßen Handlingvorrichtungen insbesondere eine Hintergriffseinheit mit wenigstens zwei Hintergriffselementen vorgesehen, die parallel zu einer Bewegungsebene relativ zueinander gegenläufig in eine Offenstellung und in eine Hintergriffsstellung bewegbar sind. Die Bewegungsebene der Hintergriffselemente verläuft bei Anordnung der Handlingvorrichtung an dem Werkstückzuschnitt und dem diesen umgebenden Restwerkstück parallel zu der Werkstückebene. Die in die Offenstellung bewegten Hintergriffselemente weisen parallel zu der Bewegungsebene einen gegenseitigen Abstand auf, der größer ist als die Abmessung des Werkstückzuschnittes und des diesen umgebenden Restwerkstückes in der Werkstückebene. Die in die Hintergriffsstellung bewegten Hintergriffselemente sind parallel zu der Bewegungsebene in eine Position überführbar, bei welcher der Werkstückzuschnitt und das diesen umgebende Restwerkstück von den Hintergriffselementen parallel zu der Werkstückebene hintergriffen und gelagert werden können.

Besondere Ausführungsarten der erfindungsgemäßen Verfahren gemäß den Patentansprüchen 1 und 11 sowie der erfindungsgemäßen Vorrichtungen gemäß den Patentansprüchen 12 und 14 ergeben sich aus den abhängigen Patentansprüchen 2 bis 10 und 13.

Durch eine besondere Funktionssicherheit zeichnen sich das Verfahren nach Patentanspruch 2 und die Handlingvorrichtung nach Patentanspruch 13 aus. In diesen Fällen ist wenigstens eines der voneinander zu trennenden Bearbeitungsprodukte bei der Trennbewegung fixiert und folglich definiert ausgerichtet. Dadurch wird insbesondere ein Verkippen und/oder ein gegenseitiges Verhaken der voneinander zu trennenden Bearbeitungsprodukte vermieden.

Gemäß Patentanspruch 3 wird im Rahmen einer weiteren bevorzugten Variante des erfindungsgemäßen Verfahrens zum Trennen von Bearbeitungsprodukten lediglich eines der Bearbeitungsprodukte bewegt. Das andere Bearbeitungsprodukt verbleibt in der Werkstückebene. Die konstruktive Umsetzung dieser Verfahrensvariante gestaltet sich insofern einfach, als eine Hubvorrichtung zur Erzeugung der Trennbewegung von Werkstückzuschnitt und Restwerkstück lediglich für eines der beiden Bearbeitungsprodukte bereitzustellen ist.

Wird zum Trennen von Werkstückzuschnitt und Restwerkstück lediglich eines der Bearbeitungsprodukte bewegt, so empfiehlt es sich im Interesse einer maximalen Prozesssicherheit, das in der Werkstückebene verbleibende Bearbeitungsprodukt während der Trennbewegung in der von ihm eingenommenen Position zu halten (Patentanspruch 4). Dadurch wird verhindert, dass das Bearbeitungsprodukt, das in der Werkstückebene verbleiben soll, die von dem anderen Bearbeitungsprodukt ausgeführte Trennbewegung vollständig oder teilweise mitvollzieht und infolgedessen den Trennvorgang behindert. Die Haltekraft zur Festlegung des in der Werkstückebene verbleibenden Bearbeitungsproduktes kann auf unterschiedliche Art und Weise erzeugt werden.

In dem erfindungsgemäß bevorzugten Fall, dass die Werkstückebene horizontal ausgerichtet ist und die Trennbewegung als Vertikalbewegung ausgeführt wird (Patentanspruch 6), kann bevorzugtermaßen die Schwerkraft zur Festlegung des betreffenden Bearbeitungsproduktes in der Werkstückebene genutzt werden (Patentanspruch 9). Ergänzend oder alternativ besteht erfindungsgemäß die Möglichkeit, die auf das in der Werkstückebene verbleibende Bearbeitungsprodukt auszuübende Haltekraft mittels einer gesonderten Vorrichtung zu erzeugen.

In weiterer bevorzugter Ausgestaltung des erfindungsgemäßen Verfahrens zum Trennen von Bearbeitungsprodukten verbleibt der Werkstückzuschnitt in der Werkstückebene, während das Restwerkstück senkrecht zu der Werkstückebene bewegt wird (Patentanspruch 5). Diese Maßnahme empfiehlt sich vor dem Hintergrund, dass als Restwerkstück in einer Vielzahl von Bearbeitungsfällen ein Restgitter anfällt, welches als zusammenhängendes Gebilde eine Mehrzahl von Werkstückzuschnitten umgibt und dass sich die mit der Trennbewegung verbundene Handhabung des einen Restgitters einfacher bewerkstelligen lässt als die Handhabung der Mehrzahl von Werkstückzuschnitten.

Eine weitere bevorzugte Variante der Erfindung sieht in Fällen, in denen die Werkstückebene horizontal ausgerichtete ist und bei einer vertikalen Trennbewegung ein Bearbeitungsprodukt über dem anderen angeordnet wird, vor, dass das höher liegende Bearbeitungsprodukt in der von ihm eingenommenen Position gehalten wird (Patentanspruch 7). Diese Maßnahme ermöglicht es, die voneinander getrennten Bearbeitungsprodukte auf einfache Art und Weise, nämlich unter Nutzung der Schwerkraft, getrennt aus der Handlingvorrichtung abzuführen. Wird nach dem Trennvorgang der Hintergriff durch die Hintergriffseinheit der Handlingvorrichtung aufgehoben, so kann das Bearbeitungsprodukt, welches nicht gehalten wird, unter Schwerkraftwirkung die Handlingvorrichtung verlassen. Anschließend lässt sich das an der Handlingvorrichtung zunächst noch gehaltene Bearbeitungsprodukt von der Handlingvorrichtung abführen.

Im Falle der erfindungsgemäßen Verfahrensvariante gemäß Patentanspruch 8 wird das Restwerkstück in vertikaler Richtung über dem Werkstückzuschnitt angeordnet. Wird das Restwerkstück in der angehobenen Position gehalten, so kann der Werkstückzuschnitt frühzeitig und ohne Behinderung durch das Restwerkstück gehandhabt und dabei insbesondere unter Nutzung der Schwerkraft von der Handlingvorrichtung abgeführt werden.

Ausweislich Patentanspruch 10 ist im Falle einer weiteren bevorzugten Variante des erfindungsgemäßen Verfahrens zum Trennen von Bearbeitungsprodukten vorgesehen, dass die Trennbewegung, über die Fläche des Werkstückzuschnittes und/oder über die Fläche des Restwerkstückes betrachtet, mit unterschiedlichen Beträgen ausgeführt wird. Die Trennbewegung wird demnach flexibel auf die Verhältnisse an Werkstückzuschnitt und Restwerkstück abgestimmt. Dies kann beispielsweise dann zweckmäßig sein, wenn das bearbeitete Werkstück und somit auch ein bei der Werkstückbearbeitung erzeugtes Restgitter eine lediglich geringe Dicke aufweisen. Wird das Restgitter bei der Trennbewegung relativ zu dem oder den Werkstückzuschnitten bewegt und variiert der Betrag der Trennbewegung über die Fläche des Restgitters, so kann an dem Restgitter stellenweise eine Biegung erzeugt werden, die eine Trennung des Restgitters und des oder der Werkstückzuschnitte erleichtert und dadurch eine funktionssichere Trennung von Werkstückzuschnitt und Restgitter gewährleistet.

Nachfolgend wird die Erfindung anhand beispielhafter schematischer Darstellungen näher erläutert. Es zeigen:
- Figur 1: eine maschinelle Anordnung zum Laserschneiden von Blechen mit einer Laserschneidmaschine und einer davor angeordneten Automatisierungseinheit mit einer Handlingvorrichtung und
- Figuren 2 bis 8: stark schematisierte Darstellungen zur Veranschaulichung des Handlings von bearbeiteten Blechen an der maschinellen Anordnung gemäß Figur 1.

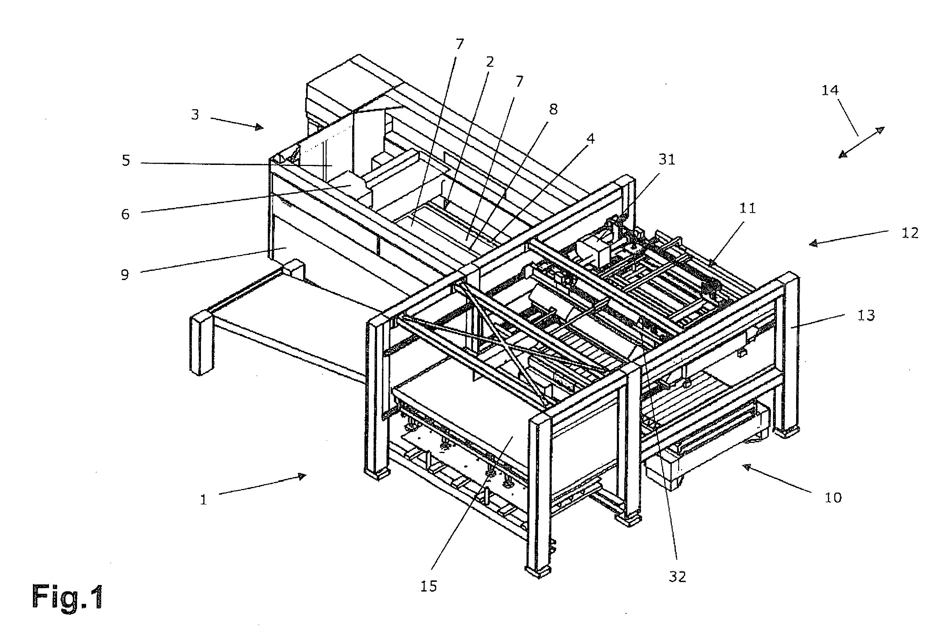

Wie Figur 1 zu entnehmen ist, umfasst eine maschinelle Anordnung 1 zum schneidenden Bearbeiten von Blechen 2 als Schneideinrichtung eine als Laserschneidmaschine 3 herkömmlicher Bauart ausgeführte Werkzeugmaschine.

Zur schneidenden Bearbeitung wird ein Blech 2, das auf einer Palette 4 im Innern eines Arbeitsbereiches 5 der Laserschneidmaschine 3 angeordnet ist, in bekannter Weise von einem Laserschneidkopf 6 der Laserschneidmaschine 3 überfahren. Figur 1 zeigt ein Blech 2 im Innern des Arbeitsbereiches 5 nach der schneidenden Bearbeitung, im Rahmen derer als Bearbeitungsprodukte Werkstückzuschnitte in Form von Fertigteilen 7 sowie ein die Fertigteile 7 als Restgitter 8 umgebendes Restwerkstück erstellt worden sind. Zwischen den Fertigteilen 7 und dem Restgitter 8 befindet sich ein Schnittspalt von wenigen Millimetern Breite.

Die Palette 4 mit dem unbearbeiteten Blech 2 war durch eine stirnseitige Öffnung in einer Einhausung 9 der Laserschneidmaschine 3 in deren Arbeitsbereich 5 bewegt worden. Zuvor war die Palette 4 mit dem unbearbeiteten Blech 2 an der Stirnseite der Laserschneidmaschine 3 auf einem herkömmlichen Palettenwechsler 10 gelagert. Auf den Palettenwechsler 10 wird die Palette 4 nach der Bearbeitung des Bleches 2 mit den dann vorliegenden Fertigteilen 7 und dem Restgitter 8 zurückbewegt. Von dem Palettenwechsler 10 werden die Fertigteile 7 und das Restgitter 8 mittels einer Handlingvorrichtung 11 einer Automatisierungseinheit 12 gemeinschaftlich abgeführt.

Die Handlingvorrichtung 11 ist motorisch angetrieben an einem Traggerüst 13 der Automatisierungseinheit 12 in Richtung eines Doppelpfeils 14 verfahrbar. Dabei kann die Handlingvorrichtung 11 wahlweise über den Palettenwechsler 10 oder über eine seitlich neben dem Palettenwechsler 10 angeordnete Produktauflage 15 bewegt werden. Außerdem kann die Handlingvorrichtung 11 in dem dargestellten Beispielsfall eine in Figur 1 nicht dargestellte Rohblechpalette anfahren, auf der unbearbeitete Bleche 2 vorgehalten werden.

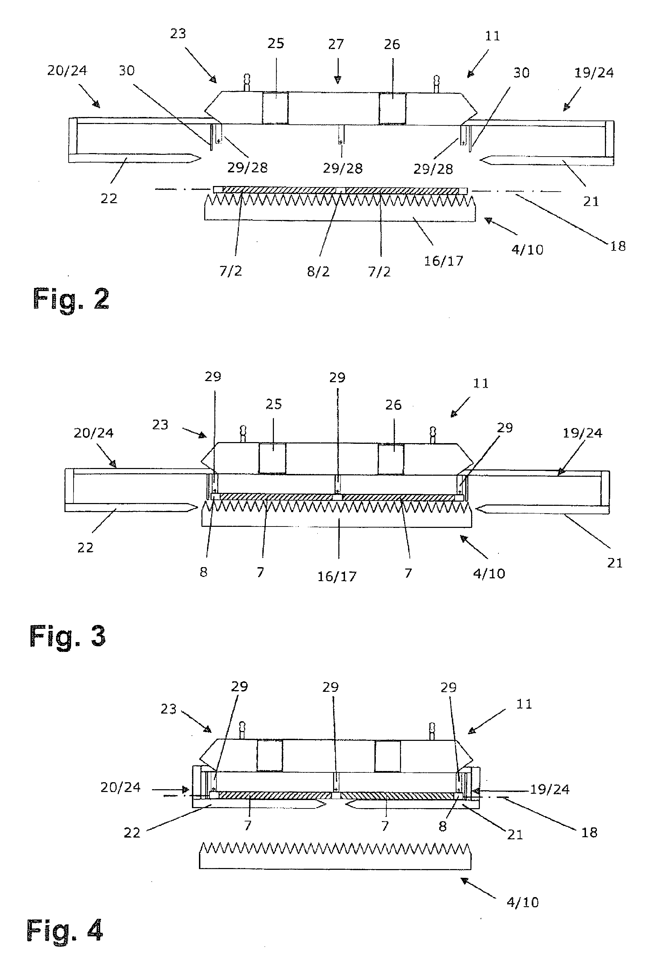

In Figur 1 befindet sich die Palette 4 mit dem bearbeiteten Blech 2 noch im Innern des Arbeitsbereiches 5 der Laserschneidmaschine 3. Nach dem Transfer der Palette 4 und des bearbeiteten Blechens 2 auf den Palettenwechsler 10 ergeben sich die in Figur 2 stark schematisiert dargestellten Verhältnisse.

In Figur 2 zu erkennen ist eine von mehreren senkrecht zu der Zeichenebene von Figur 2 mit gegenseitigem Abstand hintereinander angeordneten Auflageleisten 16 einer herkömmlichen Werkstückauflage 17 der Palette 4. Auf Spitzen der Auflageleisten 16 ist das bearbeitete Blech 2 mit den Fertigteilen 7 und dem Restgitter 8 gelagert. Die Fertigteile 7 und das Restgitter 8 liegen in einer horizontalen Werkstückebene 18, die in Figur 2 strichpunktiert angedeutet ist.

Die Handlingvorrichtung 11 hat die Position oberhalb des Palettenwechslers 10 bzw. der Palette 4 angefahren. Rechenartige Hintergriffselemente 19, 20 mit senkrecht zu der Zeichenebene von Figur 2 mit Zwischenräumen hintereinander liegenden Rechenzinken 21, 22 sind an einer als Tragrahmen 23 ausgebildeten Tragstruktur der Handlingvorrichtung 11 in eine Offenstellung verfahren. In der Offenstellung gemäß Figur 2 sind die rechenartigen Hintergriffselemente 19, 20 parallel zu der Werkstückebene 18 mit einem gegenseitigen Abstand angeordnet, der geringfügig größer ist als die Breite des bearbeiteten Bleches 2. Gemeinsam bilden die rechenartigen Hintergriffselemente 19, 20 eine Hintergriffseinheit 24 der Handlingvorrichtung 11. Zur Bewegung der rechenartigen Hintergriffselemente 19, 20 dient ein in Figur 2 schematisch dargestellter motorischer Rechenantrieb 25 an dem Tragrahmen 23.

Dem Rechenantrieb 25 benachbart ist ein gleichfalls an dem Tragrahmen 23 vorgesehener motorischer Hubantrieb 26. Der Hubantrieb 26 ist Teil einer Hubeinheit 27, die außerdem eine Haltevorrichtung 28 umfasst. Diese weist eine Mehrzahl von Halteorganen 29 auf, die an dem Tragrahmen 23 der Handlingvorrichtung 11 geführt und mittels des Hubantriebes 26 in vertikaler Richtung angehoben und abgesenkt werden können, In dem dargestellten Beispielsfall sind die Halteorgane 29 als Haltemagneten ausgebildet. Andere Bauarten von Halteorganen, beispielsweise Haltesauger, sind denkbar. Nahe den äußeren Halteorganen 29 ist der Tragrahmen 23 der Handlingvorrichtung 11 mit Abstreifern 30 versehen, die mit dem Tragrahmen 23 fest verbunden sind und sich entlang der in Figur 2 senkrecht zu der Zeichenebene verlaufenden Längsränder des Tragrahmens 23 erstrecken.

Mit sämtlichen Anbauteilen ist der Tragrahmen 23 der Handlingvorrichtung 11 mittels eines in Figur 1 erkennbaren Hubantriebsmotors 31 in vertikaler Richtung heb- und senkbar. In Figur 1 gleichfalls zu erkennen ist ein Chassis 32 der Handlingvorrichtung 11, welches den Tragrahmen 23 mit dessen Anbauteilen höhenbeweglich lagert und das seinerseits motorisch angetrieben an dem Traggerüst 13 der Automatisierungseinheit 12 verfahren kann.

Zum Abführen des bearbeiteten Bleches 2 aus dem Nahbereich der Laserschneidmaschine 3 wird ausgehend von der Situation gemäß Figur 2 der Tragrahmen 23 mit den in der Offenstellung befindlichen rechenartigen Hintergriffselementen 19, 20 in die Position gemäß Figur 3 abgesenkt. Bei der Absenkbewegung passieren die Rechenzinken 21, 22 der rechenartigen Hintergriffselemente 19, 20 das bearbeitete Blech 2 und kommen auf einem Niveau geringfügig unterhalb der Unterseite des bearbeiteten Bleches 2 zu liegen. Die Halteorgane 29 setzen auf der Oberseite des bearbeiteten Bleches 2 im Bereich des Restgitters 8 auf. Im Kontakt mit den Halteorganen 29 wird das Restgitter 8 an letzteren fixiert.

Nun werden die rechenartigen Hintergriffselemente 19, 20 mittels des Rechenantriebes 25 gegeneinander bewegt. Dabei laufen die Rechenzinken 21, 22 in die Zwischenräume zwischen den Auflageleisten 16 der Werkstückauflage 17 an der Palette 4 ein. Die rechenartigen Hintergriffselemente 19, 20 gelangen dadurch in eine Hintergriffsstellung, in welcher sie die Fertigteile 7 und das Restgitter 8 gemeinschaftlich hintergreifen.

Mit den in die Hintergriffsstellung bewegten rechenartigen Hintergriffselementen 19, 20 sowie mit den Fertigteilen 7 und dem Restgitter 8 wird der Tragrahmen 23 der Handlingvorrichtung 11 mittels des Hubantriebsmotors 31 nach oben bewegt. Dadurch werden die Fertigteile 7 und das Restgitter 8 des bearbeiteten Bleches 2 von der Werkstückauflage 17 der Palette 4 abgehoben und es ergeben sich die Verhältnisse gemäß Figur 4. Die Fertigteile 7 und das Restgitter 8 liegen mit ihrer Unterseite auf der Oberseite der Rechenzinken 21, 22 der rechenartigen Hintergriffselemente 19, 20 und werden dadurch gemeinschaftlich in der Werkstückebene 18 gelagert. Damit sind die voneinander zu trennenden Bearbeitungsprodukte für den anschließenden Trennvorgang optimal angeordnet. Insbesondere verhindert die Lagerung auf den rechenartigen Hintergriffselementen 19, 20, dass die Fertigteile 7 innerhalb des Restgitters 8 undefiniert verkippen und dadurch die anschließende Trennung der Bearbeitungsprodukte be- oder sogar verhindern.

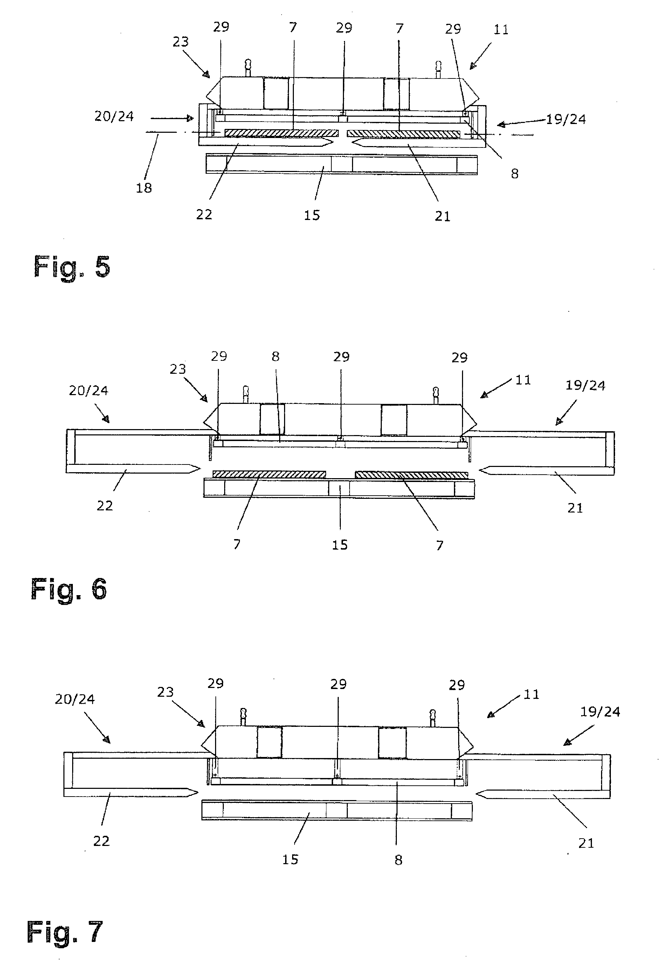

Zum Trennen der Fertigteile 7 von dem Restgitter 8 werden durch Betätigen des Hubantriebes 26 die Halteorgane 29 der Haltevorrichtung 28 in vertikaler Richtung in die Position gemäß Figur 5 angehoben. Die Halteorgane 29 nehmen dabei das an ihnen fixierte Restgitter 8 in Hubrichtung mit. Die Fertigteile 7 behalten aufgrund der auf sie einwirkenden Schwerkraft ihre Position in der Werkstückebene 18 bei. Aufgrund der von dem Restgitter 8 relativ zu den Fertigteilen 7 ausgeführten vertikalen Trennbewegung kommen die Fertigteile 7 von dem Restgitter 8 frei. Da die Trennung der Fertigteile 7 und des Restgitters 8 durchgeführt wird, während die Fertigteile 7 und das Restgitter 8 mittels der Hintergriffseinheit 24 hintergriffen werden, verbleiben die Fertigteile 7 nach der Trennung von dem Restgitter 8 auf der Oberseite der Rechenzinken 21, 22 der rechenartigen Hintergriffselemente 19, 20, wo sie für weitere, ohne Behinderung durch das Restgitter 8 durchführbare Handlingmaßnahmen bereitliegen.

In dem dargestellten Beispielsfall führen die Halteorgane 29 der Haltevorrichtung 28 als vertikale Trennbewegung Hübe mit einheitlichem Betrag (beispielsweise 50 mm) aus. Davon abweichend sind Hübe der Halteorgane 29 mit unterschiedlichen Beträgen für den Fall denkbar, dass eine funktionssichere Trennung der Fertigteile 7 und des Restgitters 8 dies erfordert.

Die Trennung der Fertigteile 7 und des Restgitters 8 kann vorgenommen werden, während die Handlingvorrichtung 11 über dem Palettenwechsler 10 angeordnet ist. Möglich ist aber auch eine zeitliche Parallelisierung der Trennung der Fertigteile 7 und des Restgitters 8 einerseits und einer Verfahrbewegung der Handlingvorrichtung 11 längs des Traggerüsts 13 der Automatisierungseinheit 12 andererseits.

Am Ende der letztgenannten Verfahrbewegung ist die Handlingvorrichtung 11 mit den daran gelagerten Bearbeitungsprodukten über der Produktauflage 15 angeordnet (Figur 5). Ausgehend von diesen Verhältnissen wird der Tragrahmen 23 der Handlingvorrichtung 11 auf das Niveau gemäß Figur 6 abgesenkt. Anschließend werden die rechenartigen Hintergriffselemente 19, 20 mittels des Rechenantriebes 25 aus der Hintergriffsstellung in die Offenstellung bewegt. Die auf den Rechenzinken 21, 22 gelagerten Fertigteile 7 werden dabei mittels der Abstreifer 30 von den Rechenzinken 21, 22 abgestreift und gelangen unter Schwerkraftwirkung auf die Produktauflage 15. Das Restgitter 8 ist weiterhin an den angehobenen Halteorganen 29 der Haltevorrichtung 28 fixiert. Alles in allem ergibt sich damit die Situation gemäß Figur 6.

Die Fertigteile 7 werden nun von der Produktauflage 15 abgeführt. Dies kann beispielsweise manuell geschenen. Alternativ ist es bei Verwendung einer als endlos umlaufendes Förderband ausgebildeten Produktauflage 15 denkbar, dass die Fertigteile 7 automatisiert von der Produktauflage 15 entfernt werden.

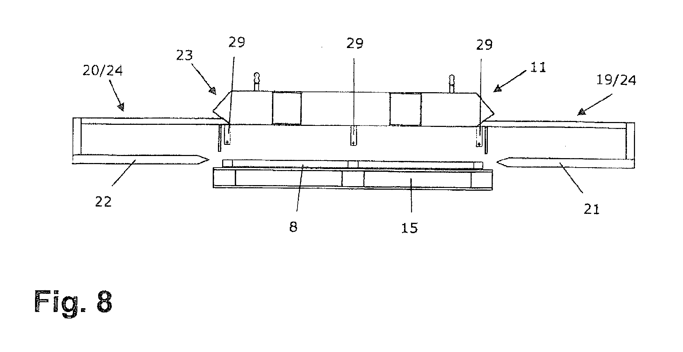

Sind die Fertigteile 7 von der Produktauflage 15 entladen, so werden die Halteorgane 29 der Haltevorrichtung 28 bei nach wie vor in der Offenstellung befindlichen rechenartigen Hintergriffselementen 19, 20 gemeinsam mit dem an den Halteorganen 29 fixierten Restgitter 8 in die Position gemäß Figur 7 abgesenkt. Nun werden die Halteorgane 29 deaktiviert und das Restgitter 8 wird unter Schwerkraftwirkung auf der Produktauflage 15 abgelegt (Figur 8). Das Restgitter 8 wird anschließend manuell oder unter Nutzung maschineller Hilfsmittel von der Produktauflage 15 abgenommen.

Die Handlingvorrichtung 11 befindet sich nun in einem Zustand, in welchem sie von dem nicht dargestellten Rohblechstapel ein unbearbeitetes Blech 2 aufnehmen und zu dem Palettenwechsler 10 transportieren kann, von wo aus das unbearbeitete Blech 2 zur schneidenden Bearbeitung dem Arbeitsbereich 5 der Laserschneidmaschine 3 zuzuführen ist.

Alternativ kann die Handlingvorrichtung 11 ausschließlich zum Abführen bearbeiteter Bleche 2 von dem Palettenwechsler 10 dienen. Das Beladen des Palettenwechslers 10 mit unbearbeiteten Blechen 2 erfolgt dann manuell oder wird von einer gesonderten Beladevorrichtung übernommen. In diesem Fall lässt sich das Beladen des Palettenwechslers 10 mit einem unbearbeiteten Blech 2 gleichzeitig mit der Trennung der Bearbeitungsprodukte an der Handlingvorrichtung 11 durchführen.

Anstelle der Produktauflage 15, auf der sowohl die Fertigteile 7 als auch das Restgitter 8 abgelegt werden, sind getrennte Paletten für die Fertigteile 7 und das Restgitter 8 denkbar, die beide von der Handlingvorrichtung 11 angefahren werden.

## Patentansprüche

1. Verfahren zum Trennen von Bearbeitungsprodukten an einer Werkzeugmaschine (3) in Form eines an der Werkzeugmaschine (3) aus einem plattenartigen Werkstück, insbesondere aus einem Blech (2), durch schneidende Werkstückbearbeitung erstellten Werkstückzuschnittes (7) und eines den Werkstückzuschnitt (7) nach der Werkstückbearbeitung umgebenden Restwerkstückes (8),
• wobei der Werkstückzuschnitt (7) und das diesen umgebende Restwerkstück (8) nach der Werkstückbearbeitung in einer plattenparallelen Werkstückebene (18) angeordnet sind und
• wobei der Werkstückzuschnitt (7) und das diesen umgebende Restwerkstück (8) mittels einer Hintergriffseinheit (24) einer Handlingvorrichtung (11) gemeinschaftlich hintergriffen und durch die Hintergriffseinheit (24) der Handlingvorrichtung (11) mit einer Anordnung in der Werkstückebene (18) gelagert werden,
**dadurch gekennzeichnet, dass**
der Werkstückzuschnitt (7) und das Restwerkstück (8) voneinander getrennt werden, indem der Werkstückzuschnitt (7) und das Restwerkstück (8), während sie mittels der Hintergriffseinheit (24) der Handlingvorrichtung (11) hintergriffen werden, an der Handlingvorrichtung (11) mit einer Trennbewegung senkrecht zu der Werkstückebene (18) relativ zueinander so weit bewegt werden, dass der Werkstückzuschnitt (7) außerhalb des Restwerkstückes (8) angeordnet ist.

2. Verfahren nach Anspruch 1, **dadurch gekennzeichnet, dass** der Werkstückzuschnitt (7) und das Restwerkstück (8) voneinander getrennt werden, indem wenigstens eines der Bearbeitungsprodukte fixiert und bei der Trennbewegung im fixierten Zustand relativ zu dem anderen Bearbeitungsprodukt senkrecht zu der Werkstückebene (18) bewegt wird.

3. Verfahren nach einem der vorhergehenden Ansprüche, **dadurch gekennzeichnet, dass** der Werkstückzuschnitt (7) und das Restwerkstück (8) mit einer Trennbewegung relativ zueinander bewegt werden, indem an der Handlingvorrichtung (11) das eine der Bearbeitungsprodukte durch die Hintergriffseinheit (24) der Handlingvorrichtung (11) gelagert in der Werkstückebene (18) verbleibt und das andere der Bearbeitungsprodukte senkrecht zu der Werkstückebene (18) bewegt wird.

4. Verfahren nach Anspruch 3, **dadurch gekennzeichnet, dass** das in der Werkstückebene (18) verbleibende Bearbeitungsprodukt während der Trennbewegung an der Handlingvorrichtung (11) durch eine Haltekraft in der Werkstückebene (18) gehalten wird.

5. Verfahren nach Anspruch 3 oder Anspruch 4, **dadurch gekennzeichnet, dass** als das eine der Bearbeitungsprodukte der Werkstückzuschnitt (7) in der Werkstückebene (18) verbleibt und als das andere der Bearbeitungsprodukte das Restwerkstück (8) senkrecht zu der Werkstückebene (18) bewegt wird.

6. Verfahren nach einem der vorhergehenden Ansprüche, **dadurch gekennzeichnet, dass** die Werkstückebene (18) horizontal ausgerichtet ist und dass die Trennbewegung des Werkstückzuschnittes (7) und des Restwerkstückes (8) als Vertikalbewegung ausgeführt wird, aufgrund derer das eine der Bearbeitungsprodukte in vertikaler Richtung über dem anderen der Bearbeitungsprodukte angeordnet wird.

7. Verfahren nach Anspruch 6, **dadurch gekennzeichnet, dass** das in vertikaler Richtung über dem anderen Bearbeitungsprodukt angeordnete Bearbeitungsprodukt in der von ihm eingenommenen Position gehalten wird.

8. Verfahren nach Anspruch 6 oder Anspruch 7, **dadurch gekennzeichnet, dass** die Trennbewegung des Werkstückzuschnittes (7) und des Restwerkstückes (8) als Vertikalbewegung ausgeführt wird, indem das Restwerkstück (8) in vertikaler Richtung über dem Werkstückzuschnitt (7) angeordnet wird.

9. Verfahren nach einem der Ansprüche 6 bis 8, **dadurch gekennzeichnet, dass** die Trennbewegung des Werkstückzuschnittes (7) und des Restwerkstückes (8) als Vertikalbewegung mit Schwerkraftunterstützung ausgeführt wird, indem das eine der Bearbeitungsprodukte unter Nutzung der Schwerkraft in der Werkstückebene (18) verbleibt und das andere der Bearbeitungsprodukte in vertikaler Richtung über dem in der Werkstückebene (18) verbliebenen Bearbeitungsprodukt angeordnet wird.

10. Verfahren nach einem der vorhergehenden Ansprüche, **dadurch gekennzeichnet, dass** die Trennbewegung, über die Fläche des Werkstückzuschnittes (7) und/oder über die Fläche des Restwerkstückes (8) betrachtet, mit unterschiedlichen Beträgen ausgeführt wird.

11. Verfahren zum Sortieren von Bearbeitungsprodukten an einer Werkzeugmaschine (3) in Form eines an der Werkzeugmaschine (3) aus einem plattenartigen Werkstück, insbesondere aus einem Blech (2), durch schneidende Werkstückbearbeitung erstellten Werkstückzuschnittes (7) und eines den Werkstückzuschnitt (7) nach der Werkstückbearbeitung umgebenden Restwerkstückes (8),
• wobei der Werkstückzuschnitt (7) und das diesen umgebende Restwerkstück (8) nach der Werkstückbearbeitung in einer plattenparallelen Werkstückebene (18) angeordnet sind,
• wobei der Werkstückzuschnitt (7) und das diesen umgebende Restwerkstück (8) mittels einer Hintergriffseinheit (24) einer Handlingvorrichtung (11) gemeinschaftlich hintergriffen und durch die Hintergriffseinheit (24) der Handlingvorrichtung (11) mit einer Anordnung in der Werkstückebene (18) gelagert werden und
• wobei der Werkstückzuschnitt (7) und das diesen umgebende Restwerkstück (8) voneinander getrennt werden,
**dadurch gekennzeichnet, dass**
der Werkstückzuschnitt (7) und das diesen umgebende Restwerkstück (8) nach dem Verfahren gemäß einem der Ansprüche 1 bis 10 voneinander getrennt werden.

12. Handlingvorrichtung zur Durchführung des Verfahrens zum Trennen von Bearbeitungsprodukten gemäß einem der Ansprüche 1 bis 10,
**dadurch gekennzeichnet, dass**
eine Hintergriffseinheit (24) und eine Hubeinheit (27) an einer gemeinsamen Tragstruktur (23) der Handlingvorrichtung (11) vorgesehen sind, wobei mittels der Hintergriffseinheit (24) der Werkstückzuschnitt (7) und das Restwerkstück (8) gemeinschaftlich hintergreifbar und mit einer Anordnung in der Werkstückebene (18) lagerbar sind und wobei mittels der Hubeinheit (27) der von der Hintergriffseinheit (24) hintergriffene Werkstückzuschnitt (7) und das von der Hintergriffseinheit (24) hintergriffene Restwerkstück (8) an der Handlingvorrichtung (11) mit einer Trennbewegung senkrecht zu der Werkstückebene (18) relativ zueinander so weit bewegbar sind, dass der Werkstückzuschnitt (7) außerhalb des Restwerkstückes (8) angeordnet ist.

13. Handlingvorrichtung nach Anspruch 12, **dadurch gekennzeichnet, dass** die Hubeinheit (27) eine Haltevorrichtung (28) aufweist, mittels derer wenigstens eines der Bearbeitungsprodukte fixierbar und bei der Trennbewegung im fixierten Zustand relativ zu dem anderen Bearbeitungsprodukt senkrecht zu der Werkstückebene (18) bewegbar ist.

14. Maschinelle Anordnung zum schneidenden Bearbeiten von plattenartigen Werkstücken, insbesondere von Blechen (2),
• mit einer Schneideinrichtung (3), mittels derer aus einem plattenartigen Werkstück, insbesondere aus einem Blech (2), als Bearbeitungsprodukte ein Werkstückzuschnitt (7) und ein den Werkstückzuschnitt (7) nach der Werkstückbearbeitung umgebendes Restwerkstück (8) erstellbar sind, wobei der Werkstückzuschnitt (7) und das diesen umgebende Restwerkstück (8) nach der Werkstückbearbeitung in einer plattenparallelen Werkstückebene (18) angeordnet sind sowie
• mit einer Handlingvorrichtung (11), die eine Hintergriffseinheit (24) aufweist, mittels derer der Werkstückzuschnitt (7) und das diesen umgebende Restwerkstück (8) gemeinschaftlich hintergreifbar und mit einer Anordnung in der Werkstückebene (18) lagerbar sind,
**dadurch gekennzeichnet, dass**
als Handlingvorrichtung (11) eine Handlingvorrichtung nach Anspruch 12 oder Anspruch 13 vorgesehen ist.

## Claims

1. Method for separating processed products on a machine tool (3) in the form of a workpiece blank (7) produced on the machine tool (3) from a sheet-like workpiece, in particular from a metal sheet (2), by processing of the workpiece by cutting, and a workpiece remnant (8) that surrounds the workpiece blank (7) after processing of the workpiece,
• wherein the workpiece blank (7) and the workpiece remnant (8) surrounding it are arranged in a sheet-parallel workpiece plane (18) after the processing of the workpiece, and
• wherein the workpiece blank (7) and the workpiece remnant (8) surrounding it are together gripped from beneath by a gripping unit (24) of a handling device (11) and are positioned by the gripping unit (24) of the handling device (11) with an arrangement in the workpiece plane (18),
**characterised in that**
the workpiece blank (7) and the workpiece remnant (8) are separated from one another as follows: the workpiece blank (7) and the workpiece remnant (8), while they are gripped from beneath by the gripping unit (24) of the handling device (11), are moved on the handling device (11) relative to one another with a separating movement perpendicular to the workpiece plane (18), to such an extent that the workpiece blank (7) is arranged outside the workpiece remnant (8).

2. Method according to claim 1, **characterised in that** the workpiece blank (7) and the workpiece remnant (8) are separated from one another as follows: at least one of the processed products is fixed and is moved during the separating movement in the fixed state relative to the other processed product perpendicularly to the workpiece plane (18).

3. Method according to any one of the preceding claims, **characterised in that** the workpiece blank (7) and the workpiece remnant (8) are moved relative to one another with a separating movement as follows: on the handling device (11), one of the processed products remains in the workpiece plane (18) the one of the processed products being positioned by means of the gripping unit (24) of the handling device (11) and the other of the processed products is moved perpendicularly to the workpiece plane (18).

4. Method according to claim 3, **characterised in that** the processed product that remains in the workpiece plane (18) is held in the workpiece plane (18) by a holding force during the separating movement on the handling device (11).

5. Method according to claim 3 or claim 4, **characterised in that** the workpiece blank (7) as the one of the processed products remains in the workpiece plane (18) and the workpiece remnant (8) as the other of the processed products is moved perpendicularly to the workpiece plane (18).

6. Method according to any one of the preceding claims, **characterised in that** the workpiece plane (18) is oriented horizontally, and **in that** the separating movement of the workpiece blank (7) and of the workpiece remnant (8) is executed as a vertical movement, on the basis of which the one of the processed products is arranged in the vertical direction above the other of the processed products.

7. Method according to claim 6, **characterised in that** the processed product arranged vertically above the other processed product is held **in that** position that it has assumed.

8. Method according to claim 6 or claim 7, **characterised in that** the separating movement of the workpiece blank (7) and of the workpiece remnant (8) is executed as a vertical movement, the workpiece remnant (8) being arranged vertically above the workpiece blank (7).

9. Method according to any one of claims 6 to 8, **characterised in that** the separating movement of the workpiece blank (7) and of the workpiece remnant (8) is executed as a gravity-assisted vertical movement, the one of the processed products remaining in the workpiece plane (18) using gravity and the other of the processed products being arranged vertically above the processed product that has remained in the workpiece plane (18).

10. Method according to any one of the preceding claims, **characterised in that** the separating movement is executed, when considered over the surface area of the workpiece blank (7) and/or over the surface area of the workpiece remnant (8), with different values.

11. Method for sorting processed products on a machine tool (3) in the form of a workpiece blank (7) produced on the machine tool (3) from a sheet-like workpiece, in particular from a metal sheet (2), by processing of the workpiece by cutting, and a workpiece remnant (8) that surrounds the workpiece blank (7) after processing of the workpiece,
• wherein the workpiece blank (7) and the workpiece remnant (8) surrounding it are arranged in a sheet-parallel workpiece plane (18) after the processing of the workpiece,
• wherein the workpiece blank (7) and the workpiece remnant (8) surrounding it are together gripped from beneath by a gripping unit (24) of a handling device (11) and are positioned by the gripping unit (24) of the handling device (11) with an arrangement in the workpiece plane (18), and
• wherein the workpiece blank (7) and the workpiece remnant (8) surrounding it are separated from one another,
**characterised in that**
the workpiece blank (7) and the workpiece remnant (8) surrounding it are separated from one another by the method according to any one of claims 1 to 10.

12. Handling device for carrying out the method for separating processed products according to any one of claims 1 to 10,
**characterised in that**
a gripping unit (24) and a lifting unit (27) are provided on a common carrier structure (23) of the handling device (11), wherein the workpiece blank (7) and the workpiece remnant (8) can together be gripped from beneath by the gripping unit (24) and positioned with an arrangement in the workpiece plane (18), and wherein the workpiece blank (7) gripped by the gripping unit (24) and the workpiece remnant (8) gripped by the gripping unit (24) can be moved relative to one another on the handling device (11) by means of the lifting unit (27) with a separating movement perpendicular to the workpiece plane (18), to such an extent that the workpiece blank (7) is arranged outside the workpiece remnant (8).

13. Handling device according to claim 12, **characterised in that** the lifting unit (27) has a holding device (28) by means of which at least one of the processed products can be fixed and moved during the separating movement, in the fixed state, relative to the other processed product perpendicularly to the workpiece plane (18).

14. Machine arrangement for the processing of sheet-like workpieces, in particular metal sheets (2), by cutting,
• having a cutting device (3) by means of which there can be produced as processed products from a sheet-like workpiece, in particular from a metal sheet (2), a workpiece blank (7) and a workpiece remnant (8) which surrounds the workpiece blank (7) after processing of the workpiece, wherein the workpiece blank (7) and the workpiece remnant (8) surrounding it are arranged in a sheet-parallel workpiece plane (18) after the processing of the workpiece, and
• having a handling device (11) which has a gripping unit (24) by means of which the workpiece blank (7) and the workpiece remnant (8) surrounding it can together be gripped from beneath and positioned with an arrangement in the workpiece plane (18),
**characterised in that**
there is provided as the handling device (11) a handling device according to claim 12 or claim 13.

## Revendications

1. Procédé pour séparer des produits d'usinage sur une machine-outil (3) sous la forme d'un flan de pièce (7) réalisé par usinage coupant sur la machine-outil (3) à partir d'une pièce du genre plaque, en particulier à partir d'une tôle (2), et d'une pièce résiduelle (8) entourant le flan de pièce (7) à la suite de l'usinage de la pièce,
- sachant que le flan de pièce (7) et la pièce résiduelle (8) qui l'entoure sont disposés à la suite de l'usinage de la pièce dans un plan de pièce (18) parallèle à la plaque,
- et sachant que le flan de pièce (7) et la pièce résiduelle (8) qui l'entoure sont conjointement saisis par l'arrière au moyen d'une unité de prise arrière (24) d'un dispositif de manipulation (11), et sont logés par l'unité de prise arrière (24) du dispositif de manipulation (11) en étant disposés dans le plan de pièce (18),
**caractérisé en ce que** le flan de pièce (7) et la pièce résiduelle (8) sont séparés l'un de l'autre par le fait que le flan de pièce (7) et la pièce résiduelle (8), tandis qu'ils sont saisis par l'arrière au moyen de l'unité de prise arrière (24) du dispositif de manipulation (11), sont déplacés l'un par rapport à l'autre sur le dispositif de manipulation (11), par un mouvement de séparation perpendiculaire au plan de pièce (18), suffisamment pour que le flan de pièce (7) soit disposé en dehors de la pièce résiduelle (8).

2. Procédé selon la revendication 1, **caractérisé en ce que** le flan de pièce (7) et la pièce résiduelle (8) sont séparés l'un de l'autre par le fait qu'au moins un des produits d'usinage est fixé et, lors du mouvement de séparation, est déplacé par rapport à l'autre produit d'usinage perpendiculairement au plan de pièce (18) tout en étant fixé.

3. Procédé selon l'une des revendications précédentes, **caractérisé en ce que** le flan de pièce (7) et la pièce résiduelle (8) sont, par un mouvement de séparation, déplacés l'un par rapport à l'autre par le fait que, sur le dispositif de manipulation (11), l'un des produits d'usinage reste logé dans le plan de pièce (18) par l'unité de prise arrière (24) du dispositif de manipulation (11), et l'autre des produits d'usinage est déplacé perpendiculairement au plan de pièce (18).

4. Procédé selon la revendication 3, **caractérisé en ce que** le produit d'usinage restant dans le plan de pièce (18) est, pendant le mouvement de séparation sur le dispositif de manipulation (11), maintenu dans le plan de pièce (18) par une force de maintien.

5. Procédé selon la revendication 3 ou la revendication 4, **caractérisé en ce que** le flan de pièce (7) reste dans le plan de pièce (18) en tant que l'un des produits d'usinage, et la pièce résiduelle (8) est déplacée perpendiculairement au plan de pièce (18) en tant que l'autre des produits d'usinage.

6. Procédé selon l'une des revendications précédentes, **caractérisé en ce que** le plan de pièce (18) est orienté horizontalement et **en ce que** le mouvement de séparation du flan de pièce (7) et de la pièce résiduelle (8) est réalisé sous forme de mouvement vertical, en raison duquel l'un des produits d'usinage est disposé en direction verticale au-dessus de l'autre des produits d'usinage.

7. Procédé selon la revendication 6, **caractérisé en ce que** le produit d'usinage disposé en direction verticale au-dessus de l'autre produit d'usinage est maintenu dans la position qu'il a prise.

8. Procédé selon la revendication 6 ou la revendication 7, **caractérisé en ce que** le mouvement de séparation du flan de pièce (7) et de la pièce résiduelle (8) est réalisé sous forme de mouvement vertical par le fait que la pièce résiduelle (8) est disposée en direction verticale au-dessus du flan de pièce (7).

9. Procédé selon l'une des revendications 6 à 8, **caractérisé en ce que** le mouvement de séparation du flan de pièce (7) et de la pièce résiduelle (8) est réalisé sous forme de mouvement vertical avec l'aide de la gravité, par le fait que l'un des produits d'usinage reste dans le plan de pièce (18) en utilisant la gravité, et que l'autre des produits d'usinage est disposé en direction verticale au-dessus du produit d'usinage resté dans le plan de pièce (18).

10. Procédé selon l'une des revendications précédentes, **caractérisé en ce que** le mouvement de séparation est réalisé avec des ampleurs différentes, considéré sur la surface du flan de pièce (7) et/ou sur la surface de la pièce résiduelle (8).

11. Procédé pour trier des produits d'usinage sur une machine-outil (3) sous la forme d'un flan de pièce (7) réalisé par usinage coupant sur la machine-outil (3) à partir d'une pièce du genre plaque, en particulier à partir d'une tôle (2), et d'une pièce résiduelle (8) entourant le flan de pièce (7) à la suite de l'usinage de la pièce,
- sachant que le flan de pièce (7) et la pièce résiduelle (8) qui l'entoure sont disposés à la suite de l'usinage de la pièce dans un plan de pièce (18) parallèle à la plaque,
- sachant que le flan de pièce (7) et la pièce résiduelle (8) qui l'entoure sont conjointement saisis par l'arrière au moyen d'une unité de prise arrière (24) d'un dispositif de manipulation (11), et sont logés par l'unité de prise arrière (24) du dispositif de manipulation (11) en étant disposés dans le plan de pièce (18),
- et sachant que le flan de pièce (7) et la pièce résiduelle (8) qui l'entoure sont séparés l'un de l'autre,
**caractérisé en ce que** le flan de pièce (7) et la pièce résiduelle (8) qui l'entoure sont séparés l'un de l'autre d'après le procédé selon l'une des revendications 1 à 10.

12. Dispositif de manipulation pour la mise en oeuvre du procédé de séparation de produits d'usinage selon l'une des revendications 1 à 10,
**caractérisé en ce qu'**il est prévu une unité de prise arrière (24) et une unité de levage (27) sur une structure porteuse commune (23) du dispositif de manipulation (11), sachant qu'au moyen de l'unité de prise arrière (24), le flan de pièce (7) et la pièce résiduelle (8) peuvent être conjointement saisis par l'arrière et logés en étant disposés dans le plan de pièce (18), et sachant qu'au moyen de l'unité de levage (27), le flan de pièce (7) saisi par l'arrière par l'unité de prise arrière (24) et la pièce résiduelle (8) saisie par l'arrière par l'unité de prise arrière (24) peuvent être déplacés l'un par rapport à l'autre sur le dispositif de manipulation (11), par un mouvement de séparation perpendiculaire au plan de pièce (18), suffisamment pour que le flan de pièce (7) soit disposé en dehors de la pièce résiduelle (8).

13. Dispositif de manipulation selon la revendication 12, **caractérisé en ce que** l'unité de levage (27) présente un dispositif de maintien (28) au moyen duquel au moins un des produits d'usinage peut être fixé et peut être, lors du mouvement de séparation, déplacé par rapport à l'autre produit d'usinage perpendiculairement au plan de pièce (18) tout en étant fixé en position.

14. Système mécanique pour l'usinage coupant de pièces du genre plaques, en particulier de tôles (2),
- avec un dispositif de coupe (3) au moyen duquel on peut réaliser comme produits d'usinage, à partir d'une pièce du genre plaque, en particulier à partir d'une tôle (2), un flan de pièce (7) et une pièce résiduelle (8) entourant le flan de pièce (7) à la suite de l'usinage de la pièce, sachant que le flan de pièce (7) et la pièce résiduelle (8) qui l'entoure sont disposés à la suite de l'usinage de la pièce dans un plan de pièce (18) parallèle à la plaque,
- et avec un dispositif de manipulation (11) qui présente une unité de prise arrière (24) au moyen de laquelle le flan de pièce (7) et la pièce résiduelle (8) qui l'entoure peuvent être conjointement saisis par l'arrière et logés en étant disposés dans le plan de pièce (18),
**caractérisé en ce qu'**il est prévu comme dispositif de manipulation (11) un dispositif de manipulation selon la revendication 12 ou la revendication 13.
